# NEUE EUROPÄISCHE PATENTSCHRIFT

(11) **EP 0 282 855 B2**
(45) Veröffentlichungstag und Bekanntmachung des Hinweises auf die Entscheidung über den Einspruch: **17.03.1999**
(45) Hinweis auf die Patenterteilung: 07.09.1994
(21) Anmeldenummer: 88103465.6
(22) Anmeldetag: 05.03.1988
(51) Int. Cl.: C09B 67/20, C09B 67/06, C09C 1/58, C08K 9/04

(54) **Pigmentpräparationen**
Pigment preparations
Préparation de pigments

(30) Priorität: 19.03.1987 DE 3708904
(43) Veröffentlichungstag der Anmeldung: 21.09.1988
(73) Patentinhaber: BAYER AG, 51368 Leverkusen (DE)
(72) Erfinder: Wienkenhöver, Martin, Dr., D-5090 Leverkusen 1 (DE); Paulat, Volker, Dr., D-4019 Monheim (DE); Karnath, Wolfgang, Dipl.-Ing., D-4018 Langenfeld (DE); Schulze, Hans, Dr., D-5000 Köln 80 (DE); Wolf, Karlheinz, Dr., D-5090 Leverkusen 1 (DE); Wieser, Karl-Heinz, Dr., D-5090 Leverkusen 1 (DE)

(56) Entgegenhaltungen:
- WO-A-87/07595
- DE-A- 2 238 401
- DE-A- 2 323 580
- FR-A- 1 372 507
- FR-A- 2 156 866
- JP-A-58 125 759
- US-A- 3 843 380
- US-A- 3 865 605
- US-A- 4 042 653
- US-A- 4 264 552
- US-A- 4 277 288

## Beschreibung

Die Erfindung betrifft Präparationen von organischen Pigmenten und oder Ruß sowie Verfahren zum Pigmentieren von hochmolekularem, organischen Material, insbesondere von thermoplastischen Kunststoffen, unter Verwendung dieser Pigmentpräparationen.

Zum Pigmentieren von Thermoplasten werden neben Masterbatch-Präparationen und flüssigen Pigmentpräparationen vielfach Pulverpigmente eingesetzt.

Masterbatch und flüssige Pigmentpräparationen haben den Nachteil, daß die breite Anwendbarkeit durch das Trägermaterial begrenzt ist. So müssen für die verschiedenen Thermoplaste jeweils andere Präparationen mit kompatiblen Trägermaterialien bereitgestellt werden.

Pulverpigmente finden bei der Pigmentierung von Thermoplasten breite Anwendung. Nachteilig bei der Anwendung von Pulverpigmenten ist ihre nicht immer optimale Dispergierbarkeit in Thermoplasten.

Zur Verbesserung der Dispergierbarkeit von Pigmenten werden in der Literatur verschiedene Verfahren beschrieben.

Neben der bekannten Harzung von Pigmenten, z. B. handelsüblichen Pigmenten vom Typ C. I. Pigment Red 177 (s. z. B. DE-OS 2 653 434 und DE-OS 2 540 355) sind verschiedene andere Methoden beschrieben worden.

So beschreibt z. B. die US-PS 3 133 893 die Polymerbelegung von Pigmenten; aus der GB-PS 924 584 sind Pigmentkonzentrate in Phosphorsäureestern bekannt. Auch flüssige Präparationen, z. B. in Estern aus mehrbasigen organischen Säuren und ein- oder mehrwertigen Alkoholen sind beschrieben worden (s. z. B. JP 58/149 311). Daneben gibt es eine Reihe von speziellen Verfahren zur Verbesserung der anwendungstechnischen Eigenschaften, speziell der Dispergierbarkeit, einzelner Pigmentgruppen (s. z. B. US-PS 3 156 575, DE-OS 2 323 580, EP-A1-0 042 819 und DE-OS 2 919 519). Aber auch allgemeine Verfahren zur Verbesserung der Dispergierbarkeit von Pigmenten, z. B. durch Säureverpastung im Beisein von Sulfonsäuren oder deren Salzen (DE-OS 2 209 040) und z. B. das spezielle Trocknungsverfahren oberhalb der kritischen Temperatur (DE-A1-3 009 603) sind bekannt.

Aus FR-A-2156866 (= US-A-3865605) ist ein Verfahren zur Verbesserung der Dispergierbarkeit von Pigmenten durch Verwendung von Alkylbenzolsulfonaten bekannt, jedoch ohne Hinweis auf Sprüh- oder Gefriertrocknung.

Aus FR-A-1372597 ist ein Verfahren zur Herstellung metallisierbarer Farbstoffe in Gegenwart von Dispergiermitteln und gegebenenfalls Trocknung angegeben, wiederum ohne Hinweis auf eine spezielle Trocknung. Die DE-A-2 238 401 betrifft die Herstellung anorganischer Pigmente, insbesondere von Chromatpigmenten, ebenfalls ohne Hinweis auf spezielle Trocknungsverfahren.

Die erfindung betrifft die Verwendung von Pigmentpräparationen, die ein organisches Pigment und/oder Ruß und ein Tensid aus der Reihe der Sulfobernsteinsäureester und/oder Alkylbenzolsulfonate enthalten, und die, gegebenenfalls nach Naßzerkleinerung, durch Sprüh- oder Gefriertrocknung aus wäßrigem Medium getrocknet worden sind, zum Pigmentieren von hochmolekularem organischem Material.

In die erfindungsgemäß verwendeten Pigmentpräparationen sind prinzipiell organische Pigment aller Pigmentklassen einsetzbar. Insbesondere werden solche Pigmente eingesetzt, die sich zum Einfärben von hochmolekularem organischen Material, insbesondere thermoplastischen Kunststoffen eignen. Solche Pigmente sind z. B. aus dem Buch "Einfärben von Kunststoffen", Herausgeber: Verein Deutscher Ingenieure, VDI-Gesellschaft Kunststofftechnik, VDI-Verlag GmbH, Düsseldorf 1975 (ISBN 3-18-404014-3), S 203-224 und den zu diesem Artikel angegebenen Schrifttumsverzeichnis bekannt.

Insbesondere eignen sich die folgenden Pigmenttypen als Bestandteile der erfindungsgemäß verwendeten Präparationen:

Azopigmente und Azopigmentlacke, z. B. Pigmente der Monoazoreihe, Acetessigester-Derivate, Derivate der 2,3-Oxynaphthoesäure, 2,3-Oxynaphthoesäurearylamid-Derivate, Pigmente der Disazoreihe, Abkömmlinge des 3,3'-Dichlorbenzidins; Diarylgelbtypen, kondensierte Disazopigmente; Metallkomplex-Pigmente: anthrachinoide Pigmente; Phthalocyanin-Pigmente; polycyclische Pigmente, insbesondere solche der Anthanthron-, Thioindigo-, Chinacridon-, Dioxazin-, Pyrrolo-pyrrol-, Naphthalintetracarbonsäure-, Perylen-, Isoindolin(on)-, Flavanthron-, Pyranthron- oder Isoviolanthron-Reihe.

Bevorzugt eingesetzt werden:
Azopigmente und Azopigmentlacke, z. B. der Formel 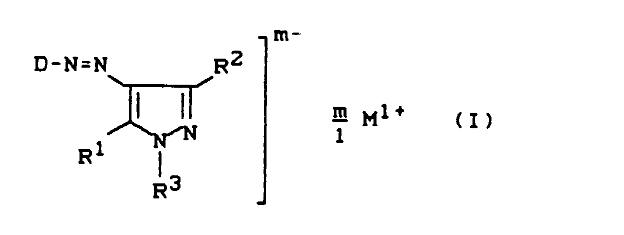 in der
- D =: 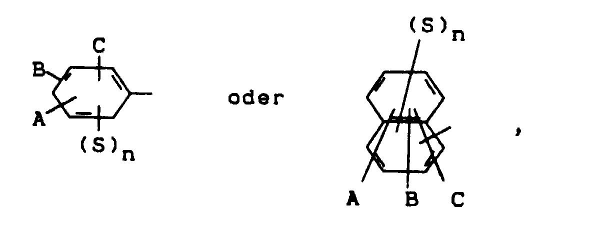
- R¹ =: -OH oder -NR⁴R⁵,
- R² =: 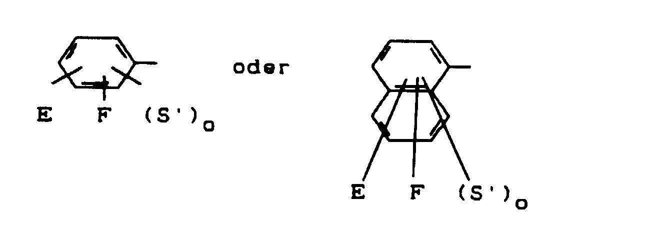
und für den Fall, daß R¹ = -NR⁴R⁵
zusätzlich H oder Carboxylat, Alkyl, insbesondere Methyl,
- R³ =: 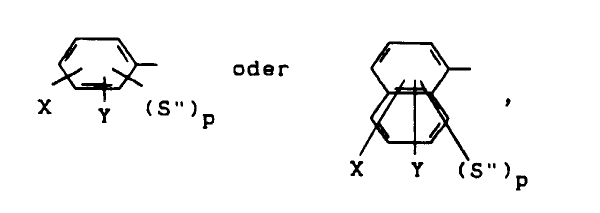
- R⁴, R⁵ =: H, Alkyl, Cycloalkyl, Aralkyl, Aryl, wobei die genannten Kohlenwasserstoffreste substituiert sein können,
- S, S', S" =: Carboxylat, Sulfonat,
- A, B, C, E, F, X, Y =: H, -CF₃, Halogen, -NO₂, -CN, R⁶, -OR⁶, -NR⁶R⁷, -NH₂, -SO₂NH₂, -SO₂NR⁶R⁷, -CONH², -CONR⁶R⁷, -NHCOR⁶,
- M =: Ammonium oder Metall,
- n, o, p =: 0, 1, 2,
- m =: n + o + p und für den Fall, daß R² = -COOH, n + o + p + 1, mit der Bedingung 1 ≦ m ≦ 3, vorzugsweise m = 2,
- 1 =: Wertigkeit von M,
- R⁶, R⁷ =: Alkyl, Cycloalkyl, Aralkyl, Aryl, wobei die genannten Kohlenwasserstoffreste substituiert sein können, bezeichnen,
z. B. der Azofarblack der Formel 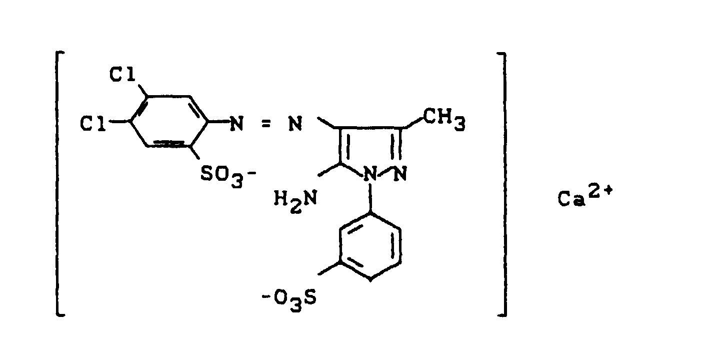 Zur Herstellung der Pigmente der Formel I kann man Amine der Formel 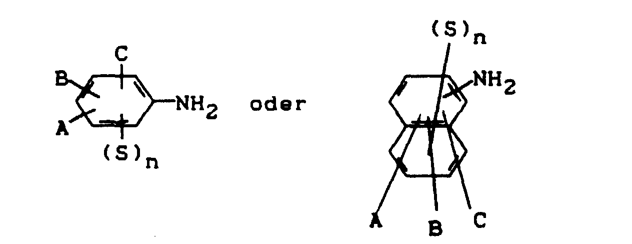 diazotieren und auf Verbindungen der Formel 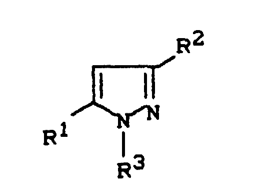 kuppeln und die Farbstoffe in die gewünschten Metallsalze überführen.
B) Pigmente der Chinacridon-Reihe, z. B. unsubstituiertes Chinacridon oder Chinacridon, das durch -CH₃, Cl oder -CONH₂ substituiert ist sowie Mischungen verschiedener Chinaridone (Solid Solutions). Als Beispiel sei C. I. Pigment Red 122 genannt.
C) Pigmente der Perylen-Reihe, z. B. N,N-dialkyl-, vzw. -dimethyl- oder N,N-diphenylsubstituiertes Perylen -3,4,9,10-tetracarbonsäurediimid, wobei die Phenylreste durch -CH₃, -OCH₃, -OC₂H₅, Cl oder 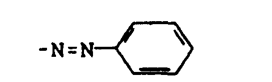 substituiert sein können. Als Beispiel sei Pigment Red 149 gennant.
D) Azobarbitursäurepigmente, insbesondere Salze oder Komplexe der Azobarbitursäure, insbesondere Azobarbitursäure-Nickel-1:1-Komplex, die andere Verbindungen eingeschlossen enthalten. Diese Verbindungen sind z. B. aus EP-A1-0073463 und EP-A1-0 074 515 bekannt.
E) Anthrachinoide Pigmente, z. B. C. I. Pigment Red 177 und das Pigment der Formel 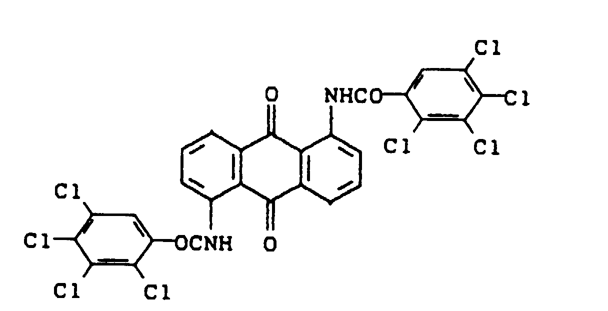
F) Metallkomplexpigmente
G) Isoindolin(on)-Pigmente, z. B. das Pigment der Formel 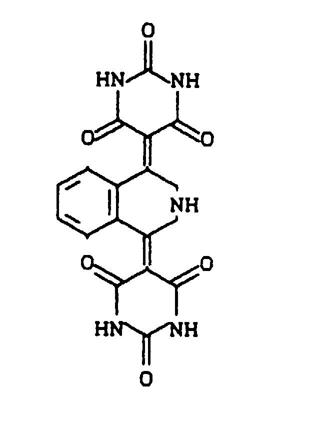
H) Phthalocyaninpigmente, insbesondere Kupferphthalocyaninpigmente, z. B. C. I. Pigment Blue 15, 15:1, 15:2, 15:3, 15:4 und C. I. Pigment Green 7.

Die erfindungsgemäßen Präparationen enthalten, bezogen auf das Gewicht von (I) + (II) vorzugsweise
I) 80 - 99 Gew.-%, besonders bevorzugt 90 - 98 Gew.-%, organisches Pigment und/oder Ruß und
II) 20 - 1 Gew.-%, besonders bevorzugt 10 - 2 Gew.-%, ganz besonders bevorzugt 2 - 6 Gew.-%, Tensid aus der Reihe der Sulfobernsteinsäureester und/oder Alkylbenzolsulfonate.

Daneben können die Pigmentpräparationen noch übliche Zusätze wie Streckmittel, z. B. Bariumsulfat, Oberflächenbelegungsmittel, z. B. Öle, Harze und weitere Tenside, z. B. in Gegenwart von Schwefelsäure erhaltene Kondensationsprodukte aus Naphthalin und Formaldehyd enthalten.

Die eingesetzten Sulfobernsteinsäureester entsprechen vorzugsweise der Formel 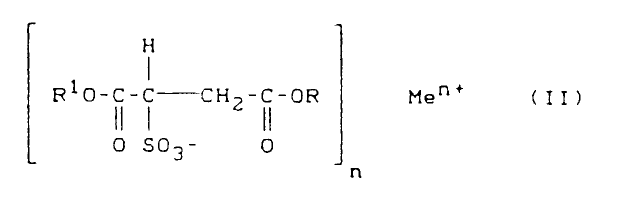 in der
- R, R¹: für Wasserstoff oder einen C₁-C₂₄-Kohlenwasserstoffrest stehen, wobei R und R¹ jedoch nicht gleichzeitig Wasserstoff bedeuten,
- n: 1 oder 2 bezeichnet und
- Me: für n = 1 für Wasserstoff, einen Ammonium-Rest oder ein Alkalimetall und für n = 2 für ein Erdalkalimetall steht.
- R, R¹: stehen bevorzugt für einen C₁-C₂₄-, insbesondere einen C₆-C₁₈-Alkyl-, -Aryl- oder -Aralkyl-Rest; besonders wichtig ist der 2-Ethylhexyl-Rest.

Weiterhin bevorzugt sind Verbindungen der Formel II mit R = R¹. Me steht insbesondere für H, Li, K. Mg, Ca, Ba, besonders bevorzugt für Na.

Die eingesetzten Alkylbenzolsulfonate entsprechen vorzugsweise der Formel III 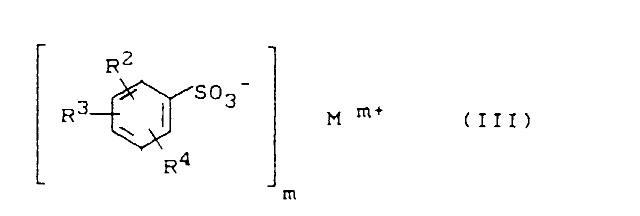 in der
- R², R³, R⁴: für Wasserstoff oder einen C₁-C₂₄-Alkylrest stehen, wobei mindestens einer der Substituenten R², R³, R⁴ ≠ Wasserstoff ist und
- m: 1 oder 2 bezeichnet und
- M: für n = 1 Wasserstoff, einen Ammonium-Rest oder ein Alkalimetall und für m = 2 für ein Erdalkalimetall steht.
- R², R³, R⁴: stehen neben Wasserstoff bevorzugt für einen C₆-C₁₈-Alkylrest, wobei insbesondere Alkylbenzolsulfonate mit R² = R³ = H und R⁴ = C₁-C₂₄-Alkyl, bzw. C₆-C₁₈-Alkyl von Interesse sind; besonders wichtig ist der Dodecyl-Rest.
- M: steht insbesondere für H, Li, Na, K, Mg, Ca, Ba, besonders bevorzugt für einen Ammonium-Rest, z. B. Monoethanol-, Diethanol- und Triethanolammonium.

Die gegebenenfalls vorzunehmende Zerkleinerung kann nach Verflüssigung eines Pigmentpreßkuchens mit den o.a. Tensiden und Wasser oder durch Anteigen von Trockenpigment, Tensid und Wasser in üblichen Naßzerkleinerungsgeräten, wie Korundscheiben - und/oder Perlmühlen erfolgen.

Die Trocknung der Präparationen erfolgt durch Sprühtrocknung, insbesondere Pulver- oder Granulatsprühtrocknung, oder Gefriertrocknung.

Die erfindungsgemäß verwendeten Präparationen eignen sich zum Pigmentieren von hochmolekularem organischen Material, insbesondere von thermoplastischen Kunststoffen wie Polyolefine, z. B. Polyethylen niedriger und hoher Dichte, Polypropylen, Polyamide, lineare Polyester, Polyurethane, Polystyrol, Polyvinylchlorid, Polycarbonat, Acrylnitril-Butadien-Styrol-Copolymeren. Die Einarbeitung der Pigmentpräparationen in die Kunststoffe erfolgt nach üblichen Verfahren wie sie z. B. in dem Buch "Einfärben von Kunststoffen", Herausgeber: Verein Deutscher Ingenieure, VDI-Gesellschaft Kunststofftechnik, VDI-Verlag GmbH, Düsseldorf 1975 (ISBN 3-18-404014-3), insbesondere S. 241-390, beschrieben sind.

Die Erfindung betrifft weiterhin die erfindungsgemäß verwendeten Pigmentpräparationen, die ein organisches Pigment und/oder Ruß und ein Tensid aus der Reihe der Alkylbenzolsulfonate enthalten, und die, gegebenenfalls nach Naßzerkleinerung, durch Sprüh- oder Gefriertrocknung aus wäßrigem Medium getrocknet worden sind, und Pigmentpräparationen, die ein organisches Pigment und/oder Ruß und ein Tensid aus der Reihe der Sulfobernsteinsäureester enthalten, und die, gegebenenfalls nach Naßzerkleinerung, durch Sprüh- oder Gefriertrocknung aus wäßrigem Medium getrocknet worden sind, wobei das organische Pigment ausgewählt aus der nachfolgenden Gruppe ist: Chinacridone, vorzugsweise unsubstituiertes oder durch CH₃, Cl oder CONH₂ substituiertes Chinacridon, insbesondere C.I. Pigment Red 122, N,N,dialkyl-, vorzugsweise N,N-dimethyl- oder N,N-diphenylsubstituiertes Perylen-3,4,9,10-tetracarbonsäurediimid, wobei die Phenylreste unsubstituiert oder durch -CH₃, -OC₂H₅ oder Cl oder 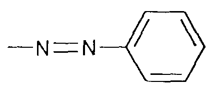 substituiert sind, insbesondere C.I. Pigment Red 149, Azobarbitursäurepigmente, Metallkomplexpigmente, Isoindolin(on)-Pigmente, Phthalocyaninpigmente, vorzugsweise Kupferphthalocyaninpigmente, insbesondere C.I. Pigment Blue 15-, -15:1, -15:2, -15:3, -15:4 und C.I. Pigment Green 7', ausgezeichnete Dispergierbarkeit in hochmolekularem organischen Material, insbesondere in Thermoplasten, besitzen. Insbesondere zeichnen sich die erfindungsgemäßen Pigmentpräparationen gegenüber den bekannten Präparationen durch breite Einsetzbarkeit in verschiedenen Thermoplasten aus.

Bevorzugte Pigmentpräparationen enthalten ein organisches Pigment und ein Tensid aus der Reihe der Sulfobernsteinsäureester die gegebenenfalls nach Nasszerkleinerung durch Sprüh- oder Gefriertrocknung aus wässrigem Medium getrocknet worden sind, wobei das organische Pigment ausgewählt aus der nachfolgenden Gruppe ist: Chinacridone, vorzugsweise unsubstituiertes oder durch CH₃, Cl oder CONH₂ substituiertes Chinacridon, insbesondere C.I. Pigment Red 122, Azobarbitursäurepigmente, Metallkomplexpigmente, Isoindolin(on)-Pigmente, Phthalocyaninpigmente, vorzugsweise Kupferphthalocyaninpigmente, insbesondere C.I. Pigment Blue 15, -15:1, -15:2, -15:3, -15:4 und C.I. Pigment Green 7'.

Die erfindungsgemäßen Pigmentpräparationen enthalten bevorzugt bezogen auf das Gewicht von (I) + (II),
I) 80 - 99 Gew.-%, insbesondere 90-98 Gew.-% organisches Pigment und/oder Ruß und
II) 20 - 1 Gew.-%, insbesondere 10-2 Gew.-% Tensid.

### Beispiel 1

13,3 g des Na-Salzes von Bis-(2-ethylhexyl)-sulfosuccinat werden in 126,7 g entsalztem Wasser bei einer Temperatur von 70°C gelöst. Diese Lösung gibt man nach dem Erkalten zu 860 g eines 31 %igen Preßkuchens von 2,9-Dimethylchinacridon (C. I. Pigment Red 122) das auf üblichem Wege formiert wurde (Säureverpastung, Temperung) und homogenisiert mittels Schnellrührer.

Es resultiert eine Dispersion mit einem Gesamtfeststoffgehalt von 28 % und einem Dispergiermittelgehalt von 5 % bezogen auf Pigment. Diese Dispersion wird nach Zerkleinerung in einer Korundscheibenmühle in einem Laborsprühtrockner bis zu einer Resffeuchte < 0,5 % getrocknet.

| | |
|---|---|
| Luft-Eintrittstemperatur | 180°C |
| Luft-Austrittstemperatur | 80°C |
| Luftdurchsatz | 250 m³/Stunde |
| Wasserverdampfungsleistung | 8 kg/Stunde |
| Technik | Zwei-Stoff-Düse |

Einfärbung von Thermoplasten
a) PVC-P: transparente Einfärbung
0,1 Tl, Rotpigment-Präparation, hergestellt nach obiger Vorschrift werden mit 100 Tl. PVC-Compound der Zusammensetzung:
70 Tl. Vinylchlorid-Homopolymerisat
30 Tl. Diisooctylphthalat
3 Tl. Stabilisatorengemisch
1 Tl. Chelator
in einer langsam laufenden Labormischvorrichtung innig vermischt. Das Mischgut wird innerhalb von zwei Minuten auf ein laufendes Labor-Mischwalzwerk aufgegeben.
Bedingungen:

| | |
|---|---|
| Friktion | 1:1,1 bis 1:1,2 |
| Walzenspalt | 0,4 bis 0,5 mm |
| Walzentemperatur | 160 ± 5°C |
| Walzdauer | 5 bis 10 Minuten |

Das Mischgut, Rotpigment-Präparation mit PVC-Compound, wird homogenisiert und als Fell abgezogen. Man erhält rote transparente Färbungen mit ausgezeichneter Lichtbeständigkeit.
b) PVC-P: gedeckte Einfärbung
0,1 Tl. Rotpigment-Präparation, hergestellt nach obiger Vorschrift, werden zusammen mit 1,0 Tl. Titandioxid (Rutiltyp) im gleichen PVC-Compound wie in Beispiel a) beschrieben vermischt und bei 160°C homogenisiert. Das vom Labor-Walzwerk abgezogene Fell hat eine deckende rote Farbnuance. Die Färbungen sind sehr gut migrationsbeständig und haben sehr hohe Lichtechtheiten.
c) HD-PE und PP: transparente und gedeckte Einfärbung
100 Tl. eines handelsüblichen Polyethylen-Granulates (HD-PE mit hoher Dichte, relativ niedrigem Molekulargewicht, Schmelzindex MFI 190/2, Prozedur 4 = 7 g/10 min oder Schmelzindex 190/5, Prozedur 5 = 20 g/10 min nach DIN 53 735 und/oder ISO/R 1133), werden mit 0,2 Tl. Rotpigment-Präparation, hergestellt nach obiger Vorschrift, in einer langsam laufenden Mischtrommel während 5 Minuten gemischt. Das so angefärbte Granulat wird über einen Einwellenextruder bei 170°C homogenisiert und zu flachen Bändern abgezogen. Das erhaltene Band wird granuliert und auf einer Schneckenspritzgießmaschine bei Temperaturen oberhalb 200°C zu Farbmusterplättchen verspritzt. Wird die Massetemperatur der gefärbten PE-Masse von 200°C auf 300°C erhöht, so ist keine Änderung der Farbnuance zwischen 200°C und 300°C feststellbar. Man erhält brillante rote Färbungen mit ausgezeichnet hoher Hitzebeständigkeit.
Gleiche Ergebnisse werden in deckenden Einfärbungen mit TiO₂ (Rutiltyp) in HD-PE und auch in kristallinem Polypropylen erreicht (transparent und gedeckt).
d) PS und SB
0,1 Tl. Rotpigment-Präparation, hergestellt nach obiger Vorschrift und 0,5 Tl. TiO₂ (Rutiltyp) werden mit 100 Tl. Polystyrol-Granulat (Standardpolystyrol K-Wert 64, Dichte 1,05 g/cm³) in einer Polyethylenflasche auf einem Rollbock während 10 Minuten gemischt. Das so angefärbte Granulat wird direkt auf eine Schneckenspritzgießmaschine unter Anwendung von erhöhtem Staudruck zu Formteilen verspritzt. Man erhält Formteile mit einer roten brillanten Nuance und gleichmäßige Pigmentverteilung. Die Pigment-Präparation ist leicht und gut dispergierbar.
Statt PS kann ein mit Butadien modifiziertes Polystyrol (SB) eingesetzt werden.
e. ABS
0,5 Tl. Rotpigment-Präparation, hergestellt nach obiger Vorschrift, werden in Kombination mit 4 Tl. TiO₂ - (Rutiltyp) mit 100 Tl. ABS-Pulvercompound vermischt (ABS = Acrylnitril-Butadien-Styrol-Copolymerisat). Das ABS-Compound enthält die üblichen Stabilisatoren, Antioxidantien und Gleitmittel. Das ABS-Pigmentgemisch wird in einem Stempelkneter während drei Minuten bei 180°C plastifiziert und homogenisiert. Die heiße thermoplastische Masse wird über ein Walzwerk ausgetragen und nach den üblichen Methoden granuliert.
Das gefärbte Granulat zeigt bei der Verarbeitung zu Formteilen auf Schneckensprilzgießmaschinen einen roten leuchtenden Farbton.
Bei Verarbeitungstemperaturen von 220°C und 280° C und langen Verweilzeiten sind keine Farbtonänderungen feststellbar.
Die Rotpigment-Präparation hat eine ausgezeichnete Hitzebeständigkeit.
Gleich gute Ergebnisse werden in Kunststoffblends der Zusammensetzung ABS/Polycarbonat erreicht.
f) PC und PC/PBT
0,2 Tl. Rotpigment-Präparation, hergestellt nach obiger Vorschrift, werden mit einem handelsüblichen Polycarbonat (Schmelzindex MFI 300°C/1,2 kg Belastung nach DIN 53 735 und/oder ISO/R 1133 = 19 g/10 min) in Form von Granulat trocken gemischt. Das so angefärbte Granulat wird auf einem Zweiwellenextruder bei 290°C geschmolzen und die Pigment-Präparation dispergiert. Über eine Strangdüse wird das homogen gefärbte PC ausgetragen und auf einer Schneidmühle zu einem gleichmäßigen Korn granuliert.
Das Granulat kann nach den üblichen Methoden des Spritzgießverfahrens zu Musterteilen oder Fertigteilen verarbeitet werden.
Bei Spritzgießtemperaturen von 290°C bis 320°C und Verweilzeiten von 5 Minuten sind keine Farbtonveränderungen feststellbar. Die Pigment-Präparation ist von 290 bis 320°C hitzebeständig.
Statt reinem PC kann eine Abmischung (Polymerblend) mit Polybutylenterephthalat eingesetzt werden.

### Beispiel 2

14,3 g des Na-Salzes von Bis-(2-ethylhexyl)-sulfosuccinat werden in 169,7 g entsalztem Wasser bei einer Temperatur von 70°C gelöst. Diese Lösung gibt man nach dem Erkalten zu 816 g eines 35 %igen Preßkuchens des Pigmentes der folgenden Konstitution: 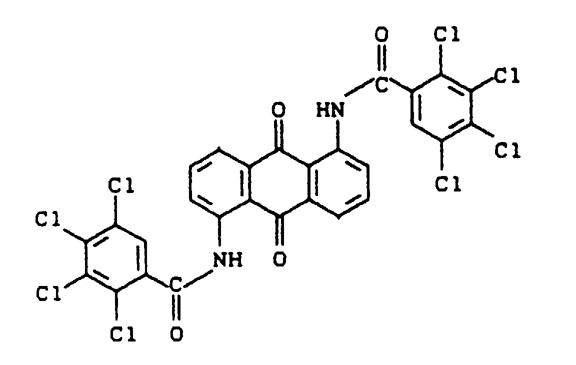 und homogenisiert mittels Schnellrührer. Die so erhaltene 30 %ige Dispersion wird wie in Beispiel 1 beschrieben zerkleinert und sprühgetrocknet. Es resultiert ein Pigment-Pulver mit sehr guter Dispergierbarkeit in Thermoplasten wie PVC-P, HD-PE und PP (siehe Beispiel 1a, b, c).

### Beispiel 3

2,86 kg des Na-Salzes von Bis-(2-ethylhexyl)-sulfosuccinat werden in 33,94 kg entsalztem Wasser bei einer Temperatur von 70°C gelöst. Nach dem Erkalten legt man diese Lösung in einem Anschlaggefäß vor und gibt dazu 163,3 kg des 35 %igen Preßkuchens des im Beispiel 2 beschriebenen Pigments. Nach Homogenisierung und Zerkleinerung analog Beispiel 1 wird in einem Technikumssprühtrockner bis zu einer Resffeuchte < 0,4 % getrocknet.

| | |
|---|---|
| Luft-Eintrittstemperatur: | 180°C |
| Luft-Austrittstemperatur | 80°C |
| Luftdurchsatz | 1500 m³/Stunde |
| Wasserverdampfungsleistung | 70 kg/Stunde |
| Technik | Ein-Stoff-Düse |

Es wird so ein staubarmes und rieselfähiges Pigment-Granulat erhalten, das in Thermoplasten wie PVC-P, HD-PE und PP sehr gut dispergierbar ist (Einfärbung der Thermoplasten analog Beispiel 1a, b, c).

### Beispiel 4

8,1 g des Na-Salzes von Bis-(2-ethylhexyl)-sulfosuccinat werden in 256 g entsalztem Wasser bei einer Temperatur von 70°C gelöst. Nach dem Erkalten gibt man 735,9 g eines 22 %igen Preßkuchens einer Interkalationsverbindung von Pigment Gelb 150 zu, homogenisiert und zerkleinert analog Beispiel 1. Pigment Gelb 150 ist eine Ni-Azobarbitursäure 1:1-Komplex der Formel

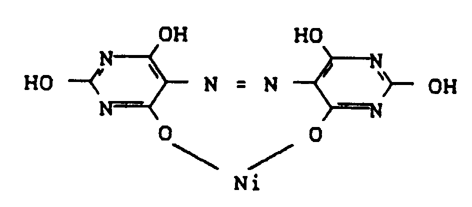

Die Interkalationsverbindung wurde gemäß EP-A1-73463, Beispiel 1, aus obigem Pigment hergestellt. Die erhaltene Dispersion mit einem Gesamtfeststoffgehalt von 17 % enthält, bezogen auf eingesetzte Interkalationsverbindung, 5 % des Dispergiermittels. Es wird wie im Beispiel 1 beschrieben sprühgetrocknet bis zu einer Resffeuchte < 0,5 %. Das Pigment-Pulver ist in den Thermoplasten PVC, PE und PP sehr gut dispergierbar (Einfärbungsvorschrift siehe Beispiel 1a, b, c).

### Beispiel 5

13,3 g des Monoethanolammonium-Salzes der Dodecylbenzolsulfonsäure werden in 126,7 g entsalztem Wasser bei einer Temperatur von 50°C gelöst. In diese Lösung gibt man nach dem Erkalten 860 g eines 31 %igen Preßkuchens von C. I. Pigment Red 122 (siehe Beispiel 1), homogenisiert, zerkleinert und sprühtrocknet wie in Beispiel 1 beschrieben. Das so erhaltene Produkt ist in den Thermoplasten PVC-P, HD-PE, PP, PS, SB, ABS und PC sehr gut dispergierbar (Einarbeitung in die Thermoplasten siehe Beispiel 1a bis f).

### Beispiel 6

Statt des Monoethanolammonium-Salzes der Dodecylbenzolsulfonsäure in Beispiel 5 werden 13,3 g Diethanolammonium-Salz der Dodecylbenzolsulfonsäure eingesetzt. Es wid ein Produkt mit vergleichbaren Eigenschaften erhalten.

### Beispiel 7

Statt des Monoethanolammonium-Salzes der Dodecylbenzolsulfonsäure in Beispiel 5 werden 13,3 g Triethanolammonium-Salz der Dodecylbenzolsulfonsäure eingesetzt. Das resultierende Produkt weist vergleichbare Eigenschaften auf.

### Beispiel 8

Statt der 13,3 g des Na-Salzes von Bis-(2-ethylhexyl)-sulfosuccinat wie in Beispiel 1 beschrieben, werden 13,3 g einer Mischung im Verhältnis 1:1 der folgenden Komponenten eingesetzt: Na-Salz von Bis-(2-ethylhexyl)-sulfosuccinat, Diethanolammoniumsalz der Dodecylbenzolsulfonsäure. Es resultiert ein Produkt mit vergleichbaren Eigenschaften wie im Beispiel 1 beschrieben.

### Beispiel 9

7,2 g des Na-Salzes von Bis-(2-ethylhexyl)-sulfosuccinat werden in 635,8 g entsalztem Wasser bei 70°C gelöst. Diese Lösung gibt man nach dem Erkalten zu 357 g eines 40 %igen Preßkuchens des Pigmentes mit der Formel

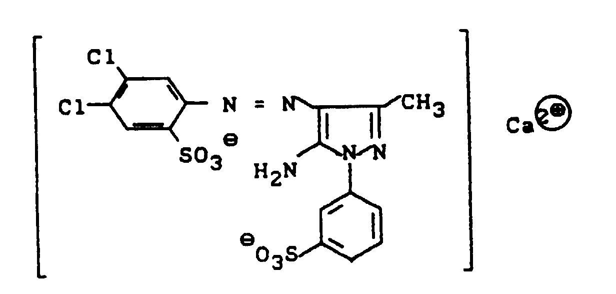

Nach Homogenisierung mittels Schnellrührer entsteht so eine Dispersion mit einem Gesamtfeststoffgehalt von 15 %, die, bezogen auf Pigment, 5 % des Dispergiermittels enthält. Nach Zerkleinerung und Sprühtrocknung wie in Beispiel 1 beschreiben erhält man ein gelbes Pigmentpulver, das in den Thermoplasten PVC, PE, PC, PS, SB und ABS sehr gut dispergierbar ist (siehe Einfärbungsvorschriften in Beispiel 1a bis f).

### Beispiel 10

9,5 g des Na-Salzes von Bis-(2-ethylhexyl)-sulfosuccinat werden in 446,2 g entsalztem Wasser bei einer Temperatur von 70°C gelöst. Diese Lösung gibt man nach dem Erkalten zu 544,3 g eines 35 %igen Preßkuchesn von C. I. Pigment Red 149. Nach Homogenisierung und Zerkleinerung wie im Beispiel 1 beschrieben resultiert eine Dispersion mit einem Gesamtfeststoffgehalt von 20 %, die, bezogen auf Pigment, 5 % Dispergiermittel enthält. Nach der Sprühtrocknung (analog Beispiel 1) erhält man ein rotes Pigmentpulver, das in PVC und PE sehr gut dispergierbar ist (Einfärbungsvorschrift siehe Beispiel 1a bis c).

## Patentansprüche

1. Pigmentpräparationen, die ein organisches Pigment und/oder Ruß und ein Tensid aus der Reihe Alkylbenzolsulfonate enthalten, und die, gegebenenfalls nach Naßzerkleinerung, durch Sprüh- oder Gefriertrocknung aus wäßrigem Medium getrocknet worden sind.

2. Pigmentpräparationen gemäß Anspruch 1, die ein Alkylbenzolsulfonat der Formel 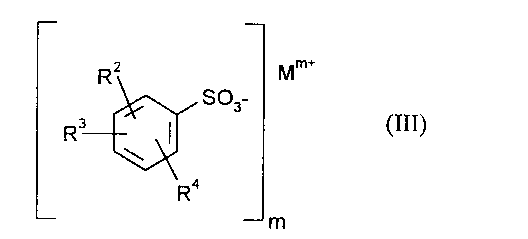 enthalten, in der
R², R³, R⁴ für Wasserstoff oder einen C₁-C₂₄-Alkylrest stehen, wobei mindestens einer der Substituenten R², R³, R⁴ ≠ H ist und
m 1 oder 2 bezeichnet und
M für n = 1 Wasserstoff, einen Ammonium-Rest oder ein Alkalimetall und für m = 2 für ein Erdalkalimetall steht.

3. Pigmentpräparationen gemäß Anspruch 1, die ein Dodecylbenzolsulfonat enthalten.

4. Pigmentpräparationen gemäß einem der Ansprüche 1 - 3, die als Pigment ein Azopigment, einen Azopigmentlack, ein Metallkomplex-Pigment, ein anthrachinoides Pigment, ein Phthalocyanin-Pigment oder ein polycyclisches Pigment enthalten.

5. Pigmentpräparationen, die ein organisches Pigment und/oder Ruß und ein n Tensid aus der Reihe der Sulfobernsteinsäureester enthalten, und die, gegebenenfalls nach Naßzerkleinerung, durch Sprüh- oder Gefriertrocknung aus wäßrigem Medium getrocknet worden sind, wobei das organische Pigment ausgewählt aus der nachfolgenden Gruppe ist: Chinacridone, vorzugsweise unsubstituiertes oder durch CH₃, Cl oder CONH₂, substituiertes Chinacridon, insbesondere C.I. Pigment Red 122, N,N-dialkyl-, vorzugsweise N,N-dimethyl- oder N,N-diphenylsubstituiertes Perylen-3,4,9,10-tetracarbonsäurediimid, wobei die Phenylreste unsubstituiert oder durch -CH₃, -OC₂H₅ oder Cl oder 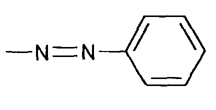 substituiert sind, insbesondere C.I. Pigment Red 149, Azobarbitursäurepigmente, Metallkomplexpigmente, Isoindolin(on)-Pigmente, Phthalocyaninpigmente, vorzugsweise Kupferphthalocyaninpigmente, insbesondere C.I. Pigment Blue 15-, -15:1, -15:2, -15:3, -15:4 und C.I. Pigment Green 7'.

6. Pigmentpräparationen gemäß Anspruch 5, dadurch gekennzeichnet, daß das Pigment aus der Reihe organische Pigmente ausgewählt aus der nachfolgenden Gruppe ist: Chinacridone, vorzugsweise unsubstituiertes oder durch CH₃, Cl oder CONH₂ substituiertes Chinacridon, insbesondere C.I. Pigment Red 122, Azobarbitursäurepigmente, Metallkomplexpigmente, Isoindolin(on)-Pigmente, Phthalocyaninpigmente, vorzugsweise Kupferphthalocyaninpigmente, insbesondere C.I. Pigment Blue 15, -15:1, -15:2, -15:3, -15:4 und C.I. Pigment Green 7'.

7. Pigmentpräparationen gemäß einem der Ansprüche 1 - 6, die, bezogen auf das Gewicht von (I) + (II),
I) 80 - 99 Gew.-% organisches Pigment und/oder Ruß und
II) 20 - 1 Gew.-% Tensid enthalten.

8. Pigmentpräparationen gemäß einem den Ansprüche 1 - 7, die, bezogen auf das Gewicht von (I) + (II),
I) 90 - 98 Gew.-% organiches Pigment und/oder Ruß und
II) 10 - 2 Gew.-% Tensid enthalten.

9. Verwendung von Pigmentpräparationen, die ein organisches Pigment und/ oder Ruß und ein Tensid aus der Reihe der Sulfobernsteinsäureester und/ oder Alkylbenzolsulfonate enthalten, und die, gegebenenfalls nach Naßzerkleinerung, durch Sprüh- oder Gefriertrocknung aus wäßrigem Medium getrocknet worden sind, zum Pigmentieren von hochmolekularem organischem Material.

10. Verwendung gemäß Anspruch 9 zum Pigmentieren von thermoplastischen Kunststoffen.

11. Verwendung gemäß Anspruch 9, dadurch gekennzeichnet, daß die Pigmentpräparationen einen Sulfobernsteinsäureester der Formel 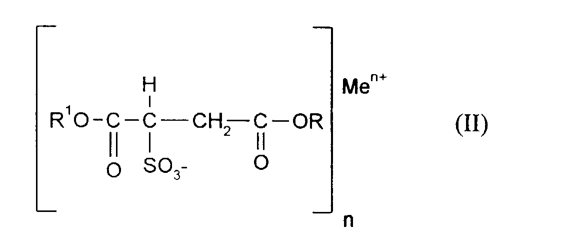 enthalten, in der
R, R¹ für Wasserstoff oder einen C₁-C₂₄-Kohlenwasserstoffrest stehen, wobei R und R¹ jedoch nicht gleichzeitig Wasserstoff bedeuten,
n 1 oder 2 bezeichnet und
Me für n = 1 für H, einen Ammonium-Rest oder ein Alkalimetall und für n = 2 für ein Erdalkalimetall steht.

12. Verwendung gemäß Anspruch 9, dadurch gekennzeichnet, daß die Pigmentpräparationen ein Bis-(2-ethyl hexyl)-sulfosuccinat enthalten.

13. Verwendung gemäß Anspruch 9, dadurch gekennzeichnet, daß eine Pigmentpräparation nach wenigstens einem der Ansprüche 1 bis 8 eingesetzt wird.

## Claims

1. Pigment preparations which contain an organic pigment and/or carbon black and a surfactant from the alkylbenzenesulphonate series and which, optionally after wet comminution, have been dried out of an aqueous medium by spray- or freeze-drying.

2. Pigment preparations according to Claim 1, which contain an alkylbenzenesulphonate of the formula 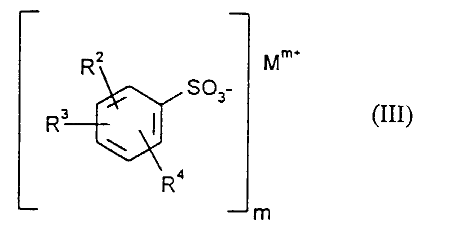 in which
R², R³ and R⁴ represent hydrogen or a C₁-C₂₄-alkyl radical, with the proviso that at least one of the substituents R², R³ and R⁴ is not hydrogen, and
m designates 1 or 2 and
M, for n = 1, represents hydrogen, an ammonium radical or an alkali metal and, for m = 2, represents an alkaline earth metal.

3. Pigment preparations according to Claim 1 which contain a dodecylbenzenesulphonate.

4. Pigment preparations according to any of Claims 1-3, which contain, as the pigment, an azo pigment, an azo pigment lake, a metal complex pigment, an anthraquinonoid pigment, a phthalocyanine pigment or a polycyclic pigment.

5. Pigment preparations which contain an organic pigment and/or carbon black and a surfactant from the sulphosuccinic ester series and which, optionally after wet comminution, have been dried out of an aqueous medium by spray- or freeze-drying, wherein the organic pigment is selected from the group consisting of quinacridones, preferably unsubstituted or CH₃-, Cl- or CONH₂-substituted quinacridone, especially C.I. Pigment Red 122, N,N-dialkyl-, preferably N,N-dimethyl-, or N,N-diphenyl-substituted perylene-3,4,9,10-tetracarboxylic diimide, wherein the phenyl radicals are unsubstituted or substituted by -CH₃, -OC₂H₅ or Cl or 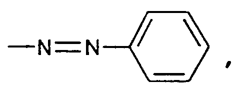 especially C.I. Pigment Red 149, azobarbituric acid pigments, metal complex pigments, isoindolin(on)e pigments, phthalocyanine pigments, preferably copper phthalocyanine pigments, especially C.I. Pigment Blue 15-, -15:1, -15:2, -15:3, -15:4 and C.I. Pigment Green 7'.

6. Pigment preparations according to Claim 5, characterized in that the pigment is an organic pigment selected from the group consisting of quinacridones, preferably unsubstituted or CH₃-, Cl- or CONH₂- substituted quinacridone, especially C.I. Pigment Red 122, azobarbituric acid pigments, metal complex pigments, isoindolin(on)e pigments, phthalocyanine pigments, preferably copper phthalocyanine pigments, especially C.I. Pigment Blue 15, -15:1, -15:2, -15:3, -15:4 and C.I. Pigment Green 7'.

7. Pigment preparations according to any of Claims 1-6, which contain, based on the weight of (I) + (II),
I) 80-99% by weight of organic pigment and/or carbon black and
II) 20-1% by weight of surfactant.

8. Pigment preparations according to any of Claims 1-7, which contain, based on the weight of (I) + (II),
I) 90-98% by weight of organic pigment and/or carbon black and
II) 10-2% by weight of surfactant.

9. Use of pigment preparations which contain an organic pigment and/or carbon black and a surfactant from the sulphosuccinic ester series and/or alkylbenzene-sulphonates and which, optionally after wet comminution, have been dried out of an aqueous medium by spray- or freeze-drying, for pigmenting high molecular weight organic material.

10. Use according to Claim 9 for pigmenting thermoplastics.

11. Use according to Claim 9, characterized in that the pigment preparations contain a sulphosuccinic ester of the formula 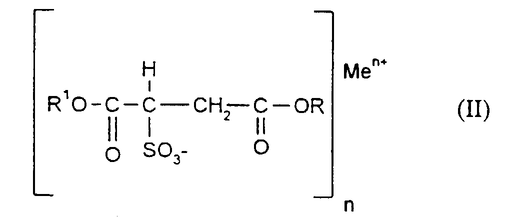 in which
R and R¹ represent hydrogen or a C₁-C₂₄-hydrocarbon radical, but R and R¹ do not both denote hydrogen at one and the same time,
n designates 1 or 2 and
Me, for n = 1, represents hydrogen, an ammonium radical or an alkali metal and, for n = 2, represents an alkaline earth metal.

12. Use according to Claim 9, characterized in that the pigment preparations contain a bis(2-ethylhexyl) sulphosuccinate.

13. Use according to Claim 9, characterized in that a pigment preparation according to at least one of Claims 1 to 8 is used.

## Revendications

1. Compositions pigmentaires contenant un pigment organique et/ou du noir de carbone et un agent tensioactif choisi parmi les alkylbenzènesulfonates et qui, éventuellement après broyage au mouillé, ont été séchées par atomisation ou lyophilisation à partir d'un milieu aqueux.

2. Compositions pigmentaires selon la revendication 1, contenant un alkylbenzènesulfonate de formule 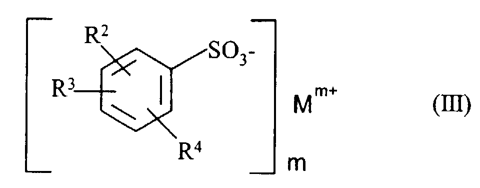 dans laquelle
R², R³, R⁴ représentent l'hydrogène ou un groupe alkyle en C₁-C₂₄, l'un au moins des substituants R², R³, R⁴ ayant une signification autre que l'hydrogène et
m est égal à 1 ou 2 et
M, lorsque m = 1, représente l'hydrogène, un radical ammonium ou un métal alcalin et, lorsque m = 2, un métal alcalino-terreux.

3. Compositions pigmentaires selon la revendication 1, contenant un dodécylbenzènesulfonate.

4. Compositions pigmentaires selon l'une des revendications 1 à 3 contenant, en tant que pigment, un pigment azoïque, une laque de pigment azoïque, un pigment de complexe métallique, un pigment anthraquinoïde, un pigment de phtalocyanine ou un pigment polycyclique.

5. Compositions pigmentaires qui contiennent un pigment organique et/ou du noir de carbone et un tensioactif de la série des sulfosuccinates et qui, éventuellement après broyage au mouillé, ont été séchés par atomisation ou lyophilisation à partir d'un milieu aqueux, où le pigment organique est choisi dans le groupe suivant : les quinacridones, de préférence la quinacndone non substituée ou substituée par CH₃, CI ou CONH₂, en particulier le rouge pigmentaire 122 du C.I., le diimide pérylène-3,4,9,10-tétracarboxylique N,N-dialkyl-, de préférence N,N diméthyl- ou N,N-diphényl-substitué, les restes phényles étant non substitués substitués par -CH₃, -OC₂H₅ ou CI ou 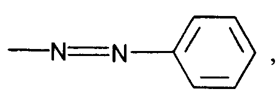 en particulier le rouge pigmentaire 149 du C.I., les pigments d'acide azobarbiturique, les pigments de complexes métalliques, les pigments d'isoindolin(one), les pigments de phtalocyanine, de préférence les pigments de phtalocyanine de cuivre, en particulier le bleu pigmentaire 15, 15:1, 15:2, 15:3, 15:4 du C.I. et le vert pigmentaire 7' du C.I.

6. Compositions pigmentaires selon la revendication 5, caractérisées en ce que le pigment de la série des pigments organiques est choisi dans le groupe suivant : les quinacridones, de préférence la quinacridone non substituée ou substituée par CH₃, CI ou CONH₂, en particulier le rouge pigmentaire 122 du C.I., les pigments d'acide azobarbiturique, les pigments de complexes métalliques, les pigments d'isoindolin(one), les pigments de phtalocyanine, de préférence les pigments de phtalocyanine de cuivre, en particulier le bleu pigmentaire 15, 15:1, 15:2, 15:3, 15:4 du C.I. et le vert pigmentaire 7' du C.I.

7. Compositions pigmentaires selon l'une des revendications 1 à 6, contenant, sur le poids total de (I) + (II),
I) 80 à 99 % en poids d'un pigment organique et/ou de noir de carbone et
II) 20 à 1 % en poids d'agent tensioactif.

8. Compositions pigmentaires selon l'une des revendications 1 à 7, contenant, sur le poids total de (I) + (II),
I) 90 à 98 % en poids d'un pigment organique et/ou de noir de carbone et
II) 10 à 2 % en poids d'agent tensioactif.

9. Utilisation de compositions pigmentaires qui contiennent un pigment organique et/ou du noir de carbone et un tensioactif de la série des sulfosuccinates et/ou des alkylbenzènesulfonates et qui, éventuellement après broyage au mouillé, ont été séchées par atomisation ou lyophilisation à partir d'un milieu aqueux, pour la pigmentation d'une matière organique à haute masse moléculaire.

10. Utilisation selon la revendication 9 pour la pigmentation de matières synthétiques thermoplastiques.

11. Utilisation selon la revendication 9, caractérisée en ce que les compositions pigmentaires contiennent un sulfosuccinate de formule 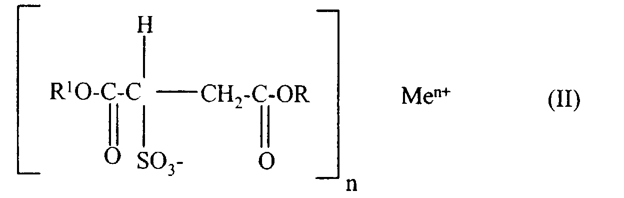 dans laquelle
R, R¹ représentent l'hydrogène ou un radical hydrocarboné en C₁-C₂₄, mais ne peuvent représenter tous deux l'hydrogène,
n est égal à 1 ou 2 et
Me, lorsque n = 1, représente H, un radical ammonium ou un métal alcalin, et lorsque n = 2, un métal alcalino-terreux.

12. Utilisation selon la revendication 9, caractérisée en ce que les compositions pigmentaires contiennent un sulfosuccinate de bis-(2-éthylhexyle).

13. Utilisation selon la revendication 9, caractérisée en ce qu'une composition pigmentaire selon au moins l'une des revendications 1 à 8 est utilisée.
